# EUROPÄISCHE PATENTSCHRIFT

(11) **EP 3 212 914 B1**
(45) Veröffentlichungstag und Bekanntmachung des Hinweises auf die Patenterteilung: **06.02.2019**
(21) Anmeldenummer: 15784333.5
(22) Anmeldetag: 20.10.2015
(51) Int. Cl.: F02D 41/24, F02M 37/08

(54) **VERFAHREN ZUM KALIBRIEREN EINER FLUIDPUMPENANORDNUNG**
METHOD FOR CALIBRATING A FLUID PUMP ARRANGEMENT
PROCÉDÉ D'ÉTALONNAGE D'UN ENSEMBLE POMPE À FLUIDE

(30) Priorität: 27.10.2014 DE 102014221865
(43) Veröffentlichungstag der Anmeldung: 06.09.2017
(73) Patentinhaber: Continental Automotive GmbH, 30165 Hannover (DE)
(72) Erfinder: BEHRENDT, Gerald, 60435 Frankfurt am Main (DE)
(86) Internationale Anmeldenummer: PCT/EP2015/074240
(87) Internationale Veröffentlichungsnummer: WO 2016/066474

(56) Entgegenhaltungen:
- DE-A1- 4 446 277
- DE-A1-102007 033 858
- US-A- 5 797 372
- US-A1- 2012 156 057

## Beschreibung

Die Erfindung betrifft ein Verfahren zum Kalibrieren einer Fluidpumpenanordnung, ein Fluidsystem, welches ausgeführt ist, dieses Verfahren auszuführen und ein Fahrzeug mit einem solchen Fluidsystem.

Fluidpumpen in Form von Kraftstoffpumpen werden üblicherweise in Fahrzeugen verwendet um einen Kraftstoff, welcher üblicherweise als Fluid vorgehalten wird, aus einem Kraftstoffbehälter bzw. Kraftstofftank zu einer Antriebseinheit, welche in diesem Fall üblicherweise als Verbrennungsmotor ausgeführt ist, zu pumpen bzw. zu befördern.

Als Kraftstoffpumpen kommen dabei grundsätzlich sämtliche Pumpen in Frage, welche ausgeführt sein, ein Fluid zu pumpen. Eine Kraftstoffpumpe für ein Fahrzeug ist üblicherweise ausgeführt, den Kraftstoff mit einem vorgegebenen bzw. vorgebbaren Kraftstoffdruck an den Verbrennungsmotor zu liefern. Weiterhin ist eine Kraftstoffpumpe üblicherweise ausgeführt, einen vorgebbaren Volumenstrom des Kraftstoffs zu liefern, also eine bestimme Menge Kraftstoff pro Zeiteinheit (wird üblicherweise in Liter pro Stunde angegeben).

Herkömmliche Kraftstoffpumpen weisen eine Pumpenstufe, welche auch als Pumpeneinheit bezeichnet werden kann, und einen Pumpenmotor auf. Der Pumpenmotor ist mit der Pumpenstufe so gekoppelt, dass der Motor die Pumpenstufe in Bewegung versetzt und durch diese Bewegung der Kraftstoff gepumpt wird. Der gelieferte Volumenstrom der Kraftstoffpumpe ist dabei üblicherweise proportional zu der Drehzahl des Pumpenmotors.

Die Pumpenstufe ist über eine Kraftstoffzuleitung mit dem Kraftstoffbehälter gekoppelt oder befindet sich im Kraftstoffbehälter und ist über eine Kraftstoffableitung mit dem Verbrennungsmotor gekoppelt. Um einen vorgebbaren Kraftstoffdruck in der Kraftstoffableitung zu erreichen, ist üblicherweise ein Drucksensor so angeordnet, dass der Kraftstoffdruck erfasst wird. Der erfasste Kraftstoffdruck wird verwendet, um die Drehzahl des Pumpenmotors zu variieren, wenn der Kraftstoffdruck in der Kraftstoffableitung verändert werden soll.

Es gibt neben Fluidpumpenanordnungen mit zumindest einem Drucksensor in der Fluidableitung auch Fluidpumpenanordnungen, die über keinen Drucksensor in der Fluidableitung verfügen und bei denen der Fluiddruck in der Fluidableitung über Parameter des Pumpenmotors und/oder der Pumpenstufe vorgegeben wird. Solche Fluidpumpenanordnungen werden im Rahmen dieser Beschreibung als "sensorlose Fluidpumpenanordnungen" bezeichnet, wobei hiermit der Verzicht auf einen Drucksensor in der Fluidableitung der Fluidpumpenanordnung gemeint ist.

Als Pumpenvorrichtung kann beispielsweise ein drehzahlgeregeltes System (beispielsweise mit einem Synchronmotor in der Ausführungsform als Permanentmagnet-Motor, insbesondere mit Permanentmagnet-Rotor) eingesetzt werden, da die Drehzahl des Pumpenmotors proportional zu dem Volumenstrom ist. Wird bei konstantem Volumenstrom die Drehzahl erhöht, steigt damit auch der Druck in der Kraftstoffableitung. Alternativ kann die Pumpenvorrichtung auch einen Gleichstrommotor aufweisen, der keine Drehzahlregelung aufweist bzw. erfordert. Das Verhalten im Einzelfall ist abhängig von der sogenannten Drucksteifheit der Pumpenstufe.

DE4446277A1 zeigt ein Kraftstoffversorgungssystem für eine Brennkraftmaschine, bei dem wesentliche Parameter wie Kraftstoffdruck und Kraftstoffdurchfluss mit Hilfe eines Beobachters aus gemessenen Größen laufend ermittelt wird. Die ermittelten Größen werden dazu benutzt, eine bedarfsorientierte Kraftstoffförderung zu realisieren, wobei die Ansteuerungen abhängig von Brennstoffmaschinenanforderungen vom Steuergerät selbst durchgeführt werden.

DE102007033858A1 beschreibt ein Verfahren, bei dem zum Zweck einer Kalibrierung des Niederdruckbereichs in einer ersten Kalibrierungsphase eine maximale Förderleistung bzw. -menge der Kraftstoffpumpe eingestellt und dabei gegebenenfalls eine Abweichung der Hochdruckregelung im Hochdruckbereich festgestellt wird, anschließend in einer zweiten Kalibrierungsphase die Förderleistung der Kraftstoffpumpe so lange reduziert wird, bis die Zumesseinrichtung zur Einhaltung des Druckes im Hochdruckbereich die Kraftstoffförderleistung erhöht, ein applizierbarer Schwellwert für den Öffnungsgrad der Zumesseinheit festgelegt wird, beim Erreichen dieses Schwellwertes die aktuelle Ansteuerung der Zumesseinrichtung mit einer Referenzansteuerung verglichen und bei einer Abweichung ein neuer Korrekturfaktor berechnet wird und beim weiteren gesteuerten Betrieb der Kraftstoffpumpe der neue Korrekturfaktor berücksichtigt wird.

Es kann als Aufgabe der Erfindung betrachtet werden, ein Verfahren zum Kalibrieren einer sensorlosen Fluidpumpenanordnung anzugeben, welches die Genauigkeit der Kalibrierung erhöht. Diese Aufgabe wird gelöst durch den Gegenstand der unabhängigen Ansprüche. Weiterbildungen der Erfindung ergeben sich aus den abhängigen Ansprüchen und aus der folgenden Beschreibung.

Gemäß einem Aspekt der Erfindung ist ein Verfahren zum Kalibrieren einer Fluidpumpenanordnung angegeben. Das Verfahren weist die folgenden Schritte auf: Einstellen eines Volumenstroms in einer Fluidableitung der Fluidpumpenanordnung; Ermitteln eines dem Volumenstrom zugeordneten Fluiddrucks in der Fluidableitung; Ermitteln eines dem Volumenstrom zugeordneten Pumpenstroms eines Pumpenmotors der Fluidpumpenanordnung. Die vorangehenden Schritte werden jeweils während einer ersten Phase steigenden Fluiddrucks in der Fluidableitung zur Ermittlung eines ersten Wertepaares aus Volumenstrom und Pumpenstrom und während einer zweiten Phase fallenden Fluiddrucks in der Fluidableitung zur Ermittlung eines zweiten Wertepaares aus Volumenstrom und Pumpenstrom durchgeführt.

Hierdurch wird ermöglicht, eine sensorlose Fluidpumpenanordnung so zu kalibrieren, dass ein Fluiddruck in der Fluidableitung an Hand des Pumpenstroms und des Volumenstroms vorgegeben werden kann, so dass eine Ermittlung bzw. Messung des Fluiddrucks in der Fluidableitung nicht mehr erforderlich ist.

Zum Kalibrieren kann eine Druckreglereinheit genutzt werden, welchen in Abhängigkeit der Konfiguration der Druckreglereinheit einen definierten Volumenstrom bei einem zugeordneten Fluiddruck passieren lässt. Das heißt, basierend auf dem Volumenstrom kann rückgeschlossen werden auf den anliegenden Fluiddruck. Die Druckreglereinheit ist dabei so angeordnet, dass ein von der Fluidpumpenanordnung geliefertes Fluid (Volumenstrom in einer Fluidableitung) die Druckreglereinheit passieren muss. Somit ist der Volumenstrom in der Fluidableitung gleich dem Volumenstrom, welcher die Druckreglereinheit passiert.

Mit dem nun bekannten Volumenstrom des Fluids wird ein Druck ermittelt, welcher erforderlich ist, damit die Druckreglereinheit genau diesen Volumenstrom zulässt. Dies kann beispielsweise erfolgen, indem auf eine Kennlinie oder ein Datenblatt der Druckreglereinheit zurückgegriffen wird, welcher genau diese Zuordnung von Druck x bei Volumenstrom y entnommen werden kann. Dieser Zugriff kann beispielsweise auch erfolgen, indem die entsprechenden Daten aus einer Speichereinheit entnommen werden, welche ausgeführt ist, die entsprechenden Daten elektronisch vorzuhalten.

Anschließend wird ein Pumpenstrom ermittelt, welcher nötig ist, damit der Pumpenmotor der Fluidpumpenanordnung den besagten Fluiddruck liefert. Im Ergebnis liegen sodann Wertepaare aus Pumpenstrom und Volumenstrom vor, welche einem Fluiddruck in der Fluidableitung zugeordnet werden.

Basierend auf dieser Zuordnung kann ein Kennlinienfeld der Fluidpumpenanordnung kalibriert werden.

Auf Grund von Bauteiltoleranzen oder Fertigungstoleranzen und/oder nutzungsbedingten Verschleißes der Fluidpumpenanordnung kann eine regelmäßige Kalibrierung erforderlich sein, welche mittels des hier beschriebenen Verfahrens bereitgestellt wird. Eine sensorlose Fluidpumpenanordnung kann eine Kalibrierung mit mehreren Arbeitspunkten erfordern, um das Verhalten der Fluidpumpenanordnung an sich ändernde Bedingungen anzupassen, d.h. die Fluidpumpenanordnung zu kalibrieren.

Das Verfahren wie hierin beschrieben sieht vor, dass der Fluiddruck in der Fluidableitung erhöht wird und während dieser Phase ansteigenden Fluiddrucks ein erstes Wertepaar aus Volumenstrom und Pumpenstrom ermittelt und einem Fluiddruck zugeordnet wird und der gleiche Schritt während einer zweiten Phase fallenden Fluiddrucks die gleichen Schritte durchgeführt werden. Damit wird ein Verhalten der Druckreglereinheit berücksichtigt, welche als "Druckhysterese" oder "Volumenstromhysterese" bezeichnet werden kann.

In der Phase ansteigenden Volumenstroms bzw. Drucks ist ein erforderlicher Pumpenstrom höher als in einer Phase fallenden Volumenstroms bzw. Drucks, um den jeweils gleichen Fluiddruck in der Fluidableitung zu erzielen. Diese Eigenschaft kann sich aus dem Verhalten der Druckreglereinheit ergeben und wird mittels des hierin beschriebenen Verfahrens genutzt, um die Kalibrierungsgenauigkeit zu erhöhen.

Gemäß einer Ausführungsform der Erfindung werden die Schritte Einstellen eines Volumenstroms in einer Fluidableitung der Fluidpumpenanordnung; Ermitteln eines dem Volumenstrom zugeordneten Fluiddrucks in der Fluidableitung; Ermitteln eines dem Volumenstrom zugeordneten Pumpenstroms eines Pumpenmotors der Fluidpumpenanordnung während der ersten Phase steigenden Fluiddrucks in der Fluidableitung für zwei unterschiedliche Volumenströme durchgeführt, um ein weiteres Wertepaar aus Volumenstrom und Pumpenstrom zu ermitteln.

Der diesem weiteren Wertepaar zu Grunde liegende Volumenstrom ändert sich mit Bezug zu dem ersten Wertepaar. Somit wird auch ein anderer Fluiddruck in der Fluidableitung erzeugt. Dies ermöglicht es, ein geändertes Wertepaar Volumenstrom und Pumpenstrom für den sich einstellenden Fluiddruck zu ermitteln.

Somit ergeben sich drei Wertepaare Volumenstrom und Pumpenstrom sowie zugeordneter Fluiddruck, welche es ermöglichen, eine Steilheit der Kennlinie der Fluidpumpenanordnung, einen Absolutwert eines Arbeitspunktes und eine Spreizung des Kennfelds (welcher Pumpenstrom entspricht welchem Fluiddruck) genauer zu ermitteln. Insbesondere werden diese Werte ermittelt, ohne dass ein Drucksensor in der Fluidableitung angeordnet sein muss, weder für den Betrieb der Fluidpumpenanordnung, noch für die Phase der Kalibrierung.

Gemäß einer weiteren Ausführungsform der Erfindung werden die Schritte Einstellen eines Volumenstroms in einer Fluidableitung der Fluidpumpenanordnung; Ermitteln eines dem Volumenstrom zugeordneten Fluiddrucks in der Fluidableitung; Ermitteln eines dem Volumenstrom zugeordneten Pumpenstroms eines Pumpenmotors der Fluidpumpenanordnung während der zweiten Phase fallenden Fluiddrucks in der Fluidableitung für zwei unterschiedliche Volumenströme durchgeführt, um ein weiteres Wertepaar aus Volumenstrom und Pumpenstrom zu ermitteln.

Damit können beispielsweise folgende Konstellationen für das Ermitteln von Wertepaaren Volumenstrom/Pumpenstrom ermöglicht werden: a) in der ersten Phase zwei Wertepaare und in der zweiten Phase ein Wertepaar; b) in der ersten Phase und in der zweiten Phase jeweils zwei Wertepaare; c) in der ersten Phase ein Wertepaar und in der zweiten Phase zwei Wertepaare.

Mit jedem zusätzlich ermittelten Wertepaar kann die Genauigkeit der Kalibrierung erhöht werden.

Gemäß einer weiteren Ausführungsform der Erfindung weist das Einstellen des Volumenstroms in der Fluidableitung der Fluidpumpenanordnung folgenden Schritt auf: Einstellen einer Drehzahl des Pumpenmotors.

Die Drehzahl des Pumpenmotors kann als proportional zu dem gelieferten Volumenstrom betrachtet werden. Damit kann über die Angabe bzw. Vorgabe der Drehzahl des Pumpenmotors eine Größe herangezogen werden, welche in manchen Pumpenmotoren mittelbar oder unmittelbar beeinflusst werden kann und ein Äquivalent zu dem Volumenstrom darstellt.

In dieser Ausführungsform wird die Angabe des Volumenstroms in den Wertepaaren für die Kennlinie durch die Drehzahl des Pumpenmotors ersetzt, so dass das Wertepaar einen Pumpenstrom und eine Drehzahl des Pumpenmotors aufweist, welche einem bestimmten Fluiddruck zugeordnet sind.

Gemäß einer weiteren Ausführungsform der Erfindung weist das Verfahren weiterhin den Schritt auf: Zuordnen eines Wertepaares aus Volumenstrom und Pumpenstrom zu dem Fluiddruck in der Fluidableitung.

Über diesen Schritt wird erreicht, dass ein Kennlinienfeld der Fluidpumpenanordnung kalibriert wird, indem das Kennlinienfeld so verschoben und/oder verändert wird, dass ein Punkt des Kennlinienfeldes mit einem Wertepaar koinzidiert.

Insbesondere, wenn auf Grund der Hysterese der Druckreglereinheit mehr als zwei Wertepaare bereitgestellt werden, können mit einem Druckregler zwei verschiedene Werte für den Fluiddruck ermittelt werden, welche eine Kalibrierung sowohl der absoluten Anordnung, der Steigung und der Spreizung des Kennlinienfelds ermöglichen.

Gemäß einer Ausführungsform der Erfindung werden die ermittelten Wertepaare aus Volumenstrom und Pumpenstrom verwendet, um ein Drehzahl-Strom-Druck-Kennlinienfeld der Fluidpumpenanordnung zu kalibrieren.

Das Kennlinienfeld enthält zumindest eine, bevorzugt jedoch eine Mehrzahl von Kennlinien. Bei einer solchen Kennlinie handelt es sich um eine isobare Kennlinie (druck-konstante Darstellungsform bzw. Drucklinien) in einem Diagramm, welches die Stromstärke (üblicherweise angegeben in Ampere) über der Pumpenmotordrehzahl (üblicherweise angegeben in Umdrehungen pro Minute) aufträgt und einem bestimmten Fluiddruck in der Fluidableitung entspricht. Die Kennlinie verläuft dabei so, dass der bestimmte Fluiddruck in der Fluidableitung sich bei verschiedenen Konstellationen der Stromstärke und der Drehzahl einstellen kann, d. h., es gibt zu einem Fluiddruck nicht einen bestimmten Punkt in dem Diagramm, sondern mehrere Punktepaare (Kennlinie).

Das Auslesen der Stromstärke, welche einem Fluiddruck zugeordnet ist, aus einer Kennlinie ermöglicht es, dass die für das Hervorrufen eines Fluiddrucks in der Fluidableitung benötigte Stromstärke nicht in einem aufwändigen Rechenvorgang algorithmisch ermittelt werden muss. Die Stromstärke wird durch einen Zugriff auf eine hinterlegte Kennlinie ermittelt, insbesondere aus einem Kennfeld ausgelesen.

Es können mehrere Kennlinien für eine Vielzahl von unterschiedlichen Fluiddruckwerten in der Fluidableitung vorgehalten werden. In Abhängigkeit des gewünschten bzw. vorgegebenen Fluiddrucks in der Fluidableitung wird auf die entsprechende Kennlinie zugegriffen, um die benötigte Stromstärke für den Pumpenmotor zu ermitteln.

Solche Kennlinienfelder ermöglichen es, eine Fluidpumpenanordnung so zu betreiben, dass in der Fluidableitung ein gewünschter Fluiddruck bereitgestellt wird, ohne dafür einen Drucksensor in der Fluidableitung zu erfordern. Der Fluiddruck wird lediglich über die Betriebsparameter der Pumpenvorrichtung (Pumpenstrom und Pumpendrehzahl) vorgegeben bzw. eingestellt. Jeder Pumpenvorrichtungstyp kann dabei ein Kennlinienfeld oder einen Kennlinienfeldtypus aufweisen, welcher durch die Kalibrierung gemäß dem hierin beschriebenen Verfahren auf eine konkrete Pumpenvorrichtung eingestellt wird.

Die Druckreglereinheit kann beispielsweise ein mechanischer Druckregler, ein Druckbegrenzer, ein Überdruckventil oder ein anderes Bauteil, welches einen Fluiddruck auf einen vorgebbaren Wert begrenzen kann, sein.

Das hierin beschriebene Verfahren kann in anderen Worten wie folgt beschrieben werden.

Es wurde erkannt, dass das Druckregelverhalten einer Druckreglereinheit, insbesondere eines mechanischen Druckreglers, unterschiedlich ist, wenn die Druckreglereinheit von unterschiedlichen Arbeitsbedingungen (steigender oder fallender Fluiddruck bzw. Volumenstrom) ausgehend angesteuert wird. Wird eine Druckreglereinheit von einem niedrigen Druckbereich aus angesteuert, stellt sich ein höherer Druck ein, als wenn die gleiche Druckreglereinheit von einem hohen Druckbereich angesteuert wird, bei ansonsten gleichem Volumenstrom des die Druckreglereinheit durchströmenden Fluids. Weiterhin kann der Druck auch von der Menge des durchströmenden Fluids beeinflusst werden. Bei hohen Volumenströmen ist der sich einstellende Druck in der Regel größer als bei kleineren Volumenströmen.

In dem hierin beschriebenen Verfahren wird diese Erkenntnis genutzt, um für die Kalibrierung einer sensorlosen Fluidpumpenanordnung auf einen Drucksensor in der Fluidleitung zu verzichten.

Für eine Kalibrierung einer sensorlosen Fluidpumpenanordnung werden Wertepaare von Volumenstrom und Pumpenstrom genutzt, welche der Hysterese der Druckreglereinheit entsprechen. Somit kann die Steilheit, der Arbeitspunkt als Absolutwert und die Spreizung des Kennlinienfelds ermittelt werden, um eine konkrete Fluidpumpenanordnung zu kalibrieren bzw. ein vorgegebenes Kennlinienfeld auf die konkrete Fluidpumpenanordnung einzustellen. Insbesondere ermöglicht es das Verhalten der Druckreglereinheit, die Spreizung des Kennlinienfelds zu kalibrieren, ohne einen Drucksensor zu verwenden. Die Druckreglereinheit stellt durch ihre Hysterese mehrere Kalibrierpunkte bereit. Das Verhalten, dass der sich einstellende Druck unterschiedlich ist, je nachdem, von wo aus dieser Wert eingestellt wird (von einem niedrigen Volumenstrom zu einem höheren Volumenstrom oder umgekehrt), trägt dazu bei, dass mit einem Druckregler mindestens zwei verschiedene Fluiddruckwerte eingestellt werden können.

Es kann vorteilhaft sein, wenn die Druckreglereinheit eine ausreichende Druck-Hysterese bietet, d. h., dass der Pumpenstrom sich bei steigendem bzw. fallendem Volumenstrom bei den gleichen Werten des Volumenstroms unterscheidet. Je größer dieser Unterschied ist, desto genauer kann die Kalibrierung erfolgen.

Gemäß einem weiteren Aspekt der Erfindung ist ein Fluidpumpensystem angegeben. Das Fluidpumpensystem weist eine Fluidpumpenanordnung und eine Druckreglereinheit auf. Die Fluidpumpenanordnung weist eine Pumpenvorrichtung mit einem Pumpenmotor und einer Pumpeneinheit aufweist. Die Fluidpumpenanordnung weist weiter eine Steuereinheit auf, welche ausgeführt ist, das Verfahren wie hierin beschrieben auszuführen.

Das Verfahren zum Kalibrieren der Fluidpumpenanordnung kann insbesondere vor einer Inbetriebnahme der Fluidpumpenanordnung durchgeführt werden.

Gemäß einer Ausführungsform der Erfindung ist die Druckreglereinheit in einer Fluidableitung der Fluidpumpenanordnung angeordnet.

Somit liefert die Druckreglereinheit einen Fluiddruck, welcher in der Fluidableitung bereitgestellt wird.

Gemäß einem weiteren Aspekt der Erfindung ist ein Fahrzeug mit einem Fluidpumpensystem wie oben beschrieben angegeben, wobei das Fluidpumpensystem als Kraftstoffpumpe ausgeführt ist.

Gemäß einer weiteren Ausführungsform der Erfindung ist das Fluidpumpensystem mit einem Kraftstoffbehälter gekoppelt und ausgeführt, einen in dem Kraftstoffbehälter enthaltenen Kraftstoff an eine Antriebseinheit des Fahrzeugs zu liefern.

Gemäß einer weiteren Ausführungsform der Erfindung ist die Steuereinheit ausgeführt, das Verfahren wie oben beschrieben nach einem vorbestimmten Intervall erneut auszuführen.

Dies ermöglicht eine wiederkehrende Kalibrierung nach einer bestimmten Zeit oder nach einer bestimmten Betriebsdauer des Fluidpumpensystems, um die Arbeitsweise des Fluidpumpensystems regelmäßig anzupassen und die Genauigkeit dauerhaft hoch zu halten.

Gemäß einer weiteren Ausführungsform der Erfindung ist die Steuereinheit ausgeführt, das Verfahren wie oben beschrieben vor einer Inbetriebnahme des Fahrzeugs auszuführen.

Damit kann sichergestellt werden, dass das Fluidpumpensystem unabhängig von alterungsbedingten Veränderungen bei einer Inbetriebnahme des Fahrzeugs so kalibriert wird, dass das Fluidpumpensystem unabhängig vom jeweiligen Zustand den gewünschten Fluiddruck liefert.

Im Folgenden werden mit Bezug auf die Figuren Ausführungsbeispiele der Erfindung beschrieben.
- Fig. 1: zeigt eine schematische Darstellung eines Fluidsystems gemäß einem Ausführungsbeispiel der Erfindung.
- Fig. 2: zeigt eine schematische Darstellung der Schritte eines Verfahrens gemäß einem weiteren Ausführungsbeispiel der Erfindung.
- Fig. 3: zeigt eine schematische Darstellung einer Fluidpumpenanordnung eines Fluidpumpensystems gemäß einem weiteren Ausführungsbeispiel der Erfindung.
- Fig. 4: zeigt eine schematische Darstellung eines Fahrzeugs gemäß einem weiteren Ausführungsbeispiel der Erfindung.
- Fig. 5: zeigt eine schematische Darstellung eines Kennlinienfeldes eines Fluidpumpensystems gemäß einem weiteren Ausführungsbeispiel der Erfindung.
- Fig. 6: zeigt eine schematische Darstellung der Druck-Hysterese, welche dem Verfahren gemäß einem weiteren Ausführungsbeispiel der Erfindung zu Grunde liegt.

Die Darstellungen in den Figuren sind schematisch und nicht maßstabsgetreu. Werden gleiche Bezugszeichen verwendet, so beziehen sich diese auf gleiche oder ähnliche Elemente.

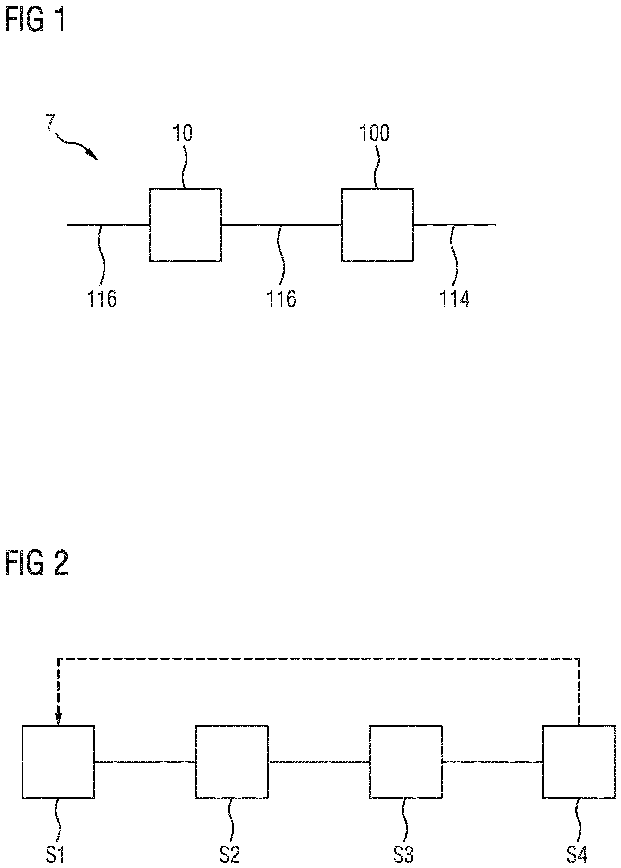

Fig. 1 zeigt ein Fluidpumpensystem 7 mit einer Fluidpumpenanordnung 100 und einer Druckreglereinheit 10. Fluidpumpenanordnung 100 ist ausgeführt, ein Fluid wie z. B. Kraftstoff über die Fluidzuleitung 114 aufzunehmen und es über die Fluidableitung 116 abzugeben. Die Druckreglereinheit 10 ist in der Fluidableitung 116 angeordnet, um so beispielsweise bei einem vorliegenden Fluiddruck in der Fluidableitung 116 den Volumenstrom einzustellen. Der Volumenstrom kann sodann beispielsweise über die Drehzahl des Pumpenmotors der Fluidpumpenanordnung 100 ermittelt werden und als Wertepaar zusammen mit dem Pumpenstrom des Pumpenmotors dem entsprechenden Fluiddruck zugeordnet werden.

Fig. 2 zeigt eine schematische Darstellung der Abfolge von Schritten eines Verfahrens zum Kalibrieren einer Fluidpumpenanordnung.

Im Schritt S1 erfolgt das Einstellen eines Volumenstroms in der Fluidableitung 116 der Fluidpumpenanordnung 100. Anschließend folgt im Schritt S2 das Ermitteln eines dem Volumenstrom zugeordneten Fluiddrucks in der Fluidableitung 116. Im nächsten Schritt S3 erfolgt das Ermitteln eines dem Volumenstrom zugeordneten Pumpenstroms des Pumpenmotors 120 der Fluidpumpenanordnung 100. Im Schritt S4 wird ein Wertepaar aus Volumenstrom und Pumpenstrom zu dem Fluiddruck in der Fluidableitung 116 zugeordnet.

Wie durch den gestrichelt dargestellten Pfeil angedeutet wird, können diese Verfahrensschritte grundsätzlich beliebig oft wiederholt werden.

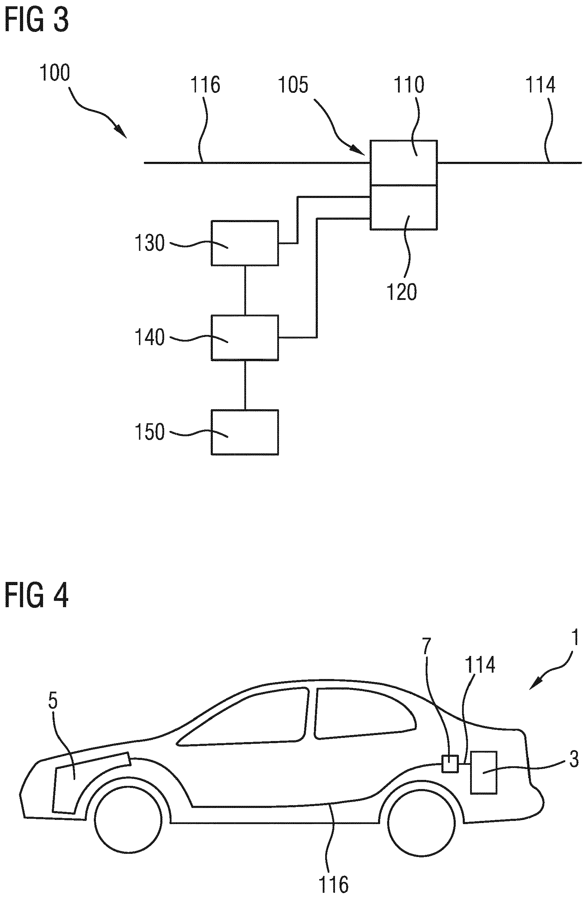

Fig. 3 zeigt eine Fluidpumpenanordnung 100 mit einer Pumpenvorrichtung 105, einer Energiequelle 130, einer Steuereinheit 140 und einer Speichereinheit 150. Bei dieser Fluidpumpenanordnung handelt es sich insbesondere um eine sensorlose Fluidpumpenanordnung.

Die Pumpenvorrichtung 105 weist eine Pumpeneinheit 110 und einen Pumpenmotor 120 auf. Die Pumpeneinheit 110 und der Pumpenmotor können in einem gemeinsamen Gehäuse angeordnet sein oder eine Montageeinheit darstellen. Der Pumpenmotor 120 ist mit der Pumpeneinheit 110 so gekoppelt, dass der Pumpenmotor die Pumpeneinheit antreibt, um mittels der Pumpeneinheit Kraftstoff zu pumpen.

Es sei darauf hingewiesen, dass die Fluidpumpenanordnung 100 mit Bezug zu den Figuren in dem Anwendungsbeispiel einer Kraftstoffpumpenanordnung beschrieben ist. Diese Beschreibung dient lediglich illustrativen Zwecken und ist nicht vorgesehen, den Schutzbereich der Patentansprüche auf die Verwendung der Fluidpumpenanordnung als Kraftstoffpumpenanordnung einzuschränken. Die in den Figuren und der zugehörigen Beschreibung dargelegten Funktionsprinzipien haben Gültigkeit für jegliche Art von Fluidpumpen. Im Folgenden werden die Begriffe der Fluidpumpenanordnung auf eine Kraftstoffpumpenanordnung bezogen.

Die Pumpeneinheit 110 ist über eine Kraftstoffzuleitung 114 mittelbar oder unmittelbar mit einem Kraftstoffbehälter (nicht gezeigt) und über die Kraftstoffableitung 116 mittelbar oder unmittelbar mit einem Verbrennungsmotor (nicht gezeigt) verbunden. Alternativ kann die Pumpenvorrichtung 105 auch in den Kraftstoffbehälter angeordnet sein.

Die Energiequelle 130 liefert einen Strom von vorgebbarer Stromstärke an den Pumpenmotor 120. Die Drehzahl des Pumpenmotors verändert sich mit der Stromstärke und eine veränderte Drehzahl des Pumpenmotors verändert die Pumpeigenschaft der Pumpeinheit so dass sich ein Volumenstrom des Kraftstoffs von der Kraftstoffzuleitung 114 zu der Kraftstoffableitung 116 und auch der Kraftstoffdruck in der Kraftstoffableitung 116 verändert. So kann in Abhängigkeit der Stromstärke des Pumpenmotors 120 der Kraftstoffdruck in der Kraftstoffableitung 116 variiert werden.

Die Steuereinheit 140 ist sowohl mit der Energiequelle 130 als auch mit der Pumpenvorrichtung 105, insbesondere dem Pumpenmotor 120 gekoppelt, so dass die Steuereinheit 140 die von der Energiequelle 130 gelieferte Stromstärke einstellen und die Drehzahl des Pumpenmotors 120 ermittelt oder erhalten kann.

Die Steuereinheit 140 ist weiterhin mit der Speichereinheit 150 gekoppelt um die in der Speichereinheit 150 abgelegten bzw. abgespeicherten Kennlinien auszulesen und daraus die für einen gewünschten Kraftstoffdruck einzustellende Stromstärke zu entnehmen bzw. zu ermitteln.

Fig. 4 zeigt ein Fahrzeug 1 mit einem Verbrennungsmotor als Antriebseinheit 5, einem Kraftstoffbehälter 3 und einem Fluidsystem 7 mit einer Fluidpumpenanordnung 100 wie beispielsweise in Fig. 3 gezeigt. Das Fluidpumpensystem 7 ist so angeordnet, dass Kraftstoff über die Kraftstoffzuleitung 114 und die Kraftstoffableitung 116 von dem Kraftstoffbehälter 3 zu der Antriebseinheit 5 gepumpt wird.

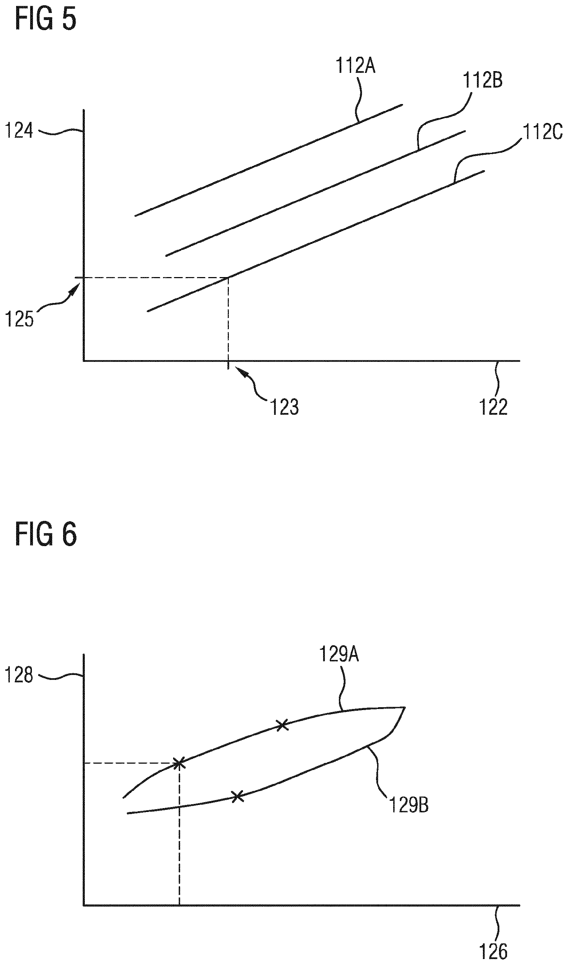

Fig. 5 zeigt ein Kennlinienfeld, in welchem drei Kennlinien 112A, 112B, 112C als isobare Kennlinien eingetragen sind. Die Kennlinien sind in einem Diagramm eingetragen, welches die Stromstärke 124 des Pumpenmotors 120 über der Drehzahl 122 des Pumpenmotors 120 aufträgt. Jede Kennlinie 112A, 112B, 112C entspricht dabei jeweils einem Kraftstoffdruck in der Kraftstoffableitung 116. Es sei darauf hingewiesen, dass die Kennlinienverläufe in Fig. 3 zu Darstellungszwecken linear aufgetragen sind, diese jedoch in Abhängigkeit der jeweiligen Fluidpumpenanordnung auch einen anderen Verlauf aufweisen können.

Die Kennlinie 112A kann beispielsweise einem Kraftstoffdruck von 6 bar, die Kennlinie 112B einem Kraftstoffdruck von 4 bar und die Kennlinie 112C einem Kraftstoffdruck von 2 bar entsprechen.

Arbeitet die Kraftstoffpumpe bei einer aktuellen Drehzahl 123 und einem Druck von 4 bar (also bei einer Stromstärke gemäß der Kennlinie 112B) und wird eine Änderung des Kraftstoffdrucks auf 2 bar vorgegeben (dies entspricht der Kennlinie 112C), so wird als neue Stromstärke 125 die Stromstärke gemäß der Kennlinie 112C bei der aktuellen Drehzahl 123 aus dem Kennlinienfeld entnommen und von der Energiequelle an den Pumpenmotor ausgegeben. Ändert sich auf Grund der geänderten Stromstärke auch die aktuelle Pumpenmotordrehzahl 123, so wird der geänderte Stromwert gemäß der geänderten Pumpenmotordrehzahl ebenfalls von der Kennlinie 112C ausgelesen, da diese Kennlinie dem neuen vorgegebenen Kraftstoffdruck entspricht. So kann eine iterative Annäherung an den Arbeitspunkt für den vorgegebenen Kraftstoffdruck erreicht werden.

Die Drehzahl des Pumpenmotors kann zwischen 2500 und 8000 Umdrehungen pro Minute liegen. Der Pumpenstrom kann zwischen 4 Ampere und 17 Ampere liegen.

Die folgende Beschreibung soll als weiteres Beispiel für den Regelungskreislauf dienen: Der Pumpenmotor 120 liefert einen Fluiddruck von 2 bar bei 2000 Umdrehungen pro Minute (rpm) und einem Strom von 5 Ampere. Der Solldruck, d. h. der in der Fluidableitung gewünschte Druck, ändert sich auf 4 bar. Die Kennlinie für 4 bar wird nun genutzt, um den Pumpenstrom für 4 bar bei der aktuellen Drehzahl, also 2000 rpm, zu ermitteln. Dieser sei beispielsweise 7 Ampere, auf welche ein Stromregler sodann regelt. Durch die gesteigerte Energiezufuhr erhöht sich die Drehzahl des Pumpenmotors und der Fluiddruck sowie der Volumenstrom erhöhen sich. Der Pumpenmotor kann auf Grund der sich ändernden Arbeitsbedingungen zu einem geänderten Pumpenstrom führen. Es können anschließend weitere Werte des Pumpenstroms und der Drehzahl ermittelt werden (iterativ, wie oben beschrieben) und einer Anpassung des Pumpenstroms zu Grunde gelegt werden, da eine veränderte Drehzahl auch eine Anpassung des Pumpenstroms erfordern kann, um den Solldruck von 4 bar zu erreichen. Diese Schritte können wiederholt werden, bis sich ein stabiler Arbeitspunkt (Pumpenstrom und Drehzahl für den Solldruck) einstellt. Ein stabiler Arbeitspunkt zeichnet sich durch ein Wertepaar Pumpenstrom/Drehzahl aus, welches auf der Kennlinie des Solldrucks liegt.

Eine Berechnung der Drehzahl ist somit nicht notwendig, um einen Sollwert des Fluiddrucks in der Fluidableitung einzustellen. Somit kann auf aufwändige Regelungen für die Drehzahl verzichtet werden.

Es sei darauf hingewiesen, dass mit Bezug zu den Fig. 3 bis Fig. 5 der Aufbau und die Arbeitsweise einer sensorlosen Fluidpumpenanordnung beschrieben wurde, um die Verwendung und den Zweck des Verfahrens zum Kalibrieren einer sensorlosen Fluidpumpenanordnung besser beschreiben zu können.

Fig. 6 beschreibt den Verlauf einer Druck-Hysterese einer Druckreglereinheit 10 wie beispielsweise in Fig. 1 gezeigt. Auf einer Achse ist der Volumenstrom 126 aufgetragen und über dem Volumenstrom ist der Fluiddruck 128 in der Fluidableitung 116 aufgetragen. Wird der Volumenstrom von einem niedrigen Wert auf einen höheren Wert erhöht, so verläuft der Druck gemäß dem Linienabschnitt 129A, wohingegen bei einem fallenden Volumenstrom der Druck gemäß dem Linienabschnitt 129B verläuft. Entlang dieser beiden Linienverläufe können Wertepaare Volumenstrom/Fluiddruck abgelesen werden. Beispielhaft sind drei Wertepaare jeweils mit einem X auf den Linienabschnitten 129A, 129B angezeigt, wobei diese Wertepaare jeweils aus dem konkreten Wert des Volumenstroms und dem zugehörigen Druck bestehen, wie beispielhaft für ein Wertepaar mittels gestrichelter Linien gezeigt.

Als Beispiel für die Ermittlung der Wertepaare sei das folgende Vorgehen angeführt: Die Druckreglereinheit 7 wird von einem niedrigen Volumenstrom kommend entlang des Linienabschnitts 129A an zwei Arbeitspunkten genutzt, um jeweils ein Wertepaar (gekennzeichnet jeweils mit einem Kreuz auf dem Linienabschnitt 129A) aus Volumenstrom 126 und Pumpenstrom 128 zu ermitteln. Weiterhin wird ein Druckwert des Fluids basierend auf dem Volumenstrom ermittelt, da die Druckreglereinheit bei dem ermittelten Volumenstrom einen bestimmten Fluiddruck einstellt. Anschließend wird die Druckreglereinheit von einem hohen Volumenstrom zu einem niedrigeren Volumenstrom entlang des Linienabschnitts 129B genutzt, um ein weiteres Wertepaar zu ermitteln. Die so ermittelten Wertepaare ermöglichen eine Kalibrierung des Kennlinienfelds aus Fig. 5 hinsichtlich Steilheit der Kennlinien 112A, 112B, 112C, Absolutwert des Kennlinienfelds (Position in dem Diagramm der Fig. 5) und Spreizung, also Abstand der Kennlinien aus Fig. 5 zueinander.

Die weiter oben angesprochene ausreichende Druck-Hysterese, d. h., dass der Pumpenstrom sich bei steigendem bzw. fallendem Volumenstrom bei den gleichen Werten des Volumenstroms unterscheided, ist in Fig. 6 als senkrechter Abstand zwischen den Linienabschnitten 129A und 129B zu erkennen. Je größer dieser Unterschied ist, desto genauer kann die Kalibrierung erfolgen.

In Fig. 6 ist der Pumpenstrom 128 über dem Volumenstrom 126 aufgetragen. Eine vergleichbare Darstellung erhält man jedoch auch, wenn man den Pumpenstrom über der Drehzahl des Pumpenmotors aufträgt, da grundsätzlich ein Proportionalitätsverhältnis zwischen der Drehzahl des Pumpenmotors und dem gelieferten Volumenstrom besteht.

## Patentansprüche

1. Verfahren zum Kalibrieren einer Fluidpumpenanordnung (100), aufweisend die folgenden Schritte:
S1. Einstellen eines Volumenstroms in einer Fluidableitung (116) der Fluidpumpenanordnung (100);
S2. Ermitteln eines dem Volumenstrom zugeordneten Fluiddrucks in der Fluidableitung (116);
S3. Ermitteln eines dem Volumenstrom zugeordneten Pumpenstroms eines Pumpenmotors (120) der Fluidpumpenanordnung (100) ;
wobei die vorangehenden Schritte S1, S2 und S3 jeweils während einer ersten Phase steigenden Fluiddrucks in der Fluidableitung (116) zur Ermittlung eines ersten Wertepaares aus Volumenstrom und Pumpenstrom und während einer zweiten Phase fallenden Fluiddrucks in der Fluidableitung (116) zur Ermittlung eines zweiten Wertepaares aus Volumenstrom und Pumpenstrom durchgeführt werden; Kalibrierung (S4) eines Kennlinienfeldes der Fluidpumpenanordnung (100) durch die so ermittelten Wertepaare.

2. Verfahren nach Anspruch 1, wobei während der ersten Phase steigenden Fluiddrucks in der Fluidableitung (116) die Schritte S1, S2 und S3 für zwei unterschiedliche Volumenströme durchgeführt werden, um ein weiteres Wertepaar aus Volumenstrom und Pumpenstrom zu ermitteln.

3. Verfahren nach Anspruch 1 oder 2, wobei während der zweiten Phase fallenden Fluiddrucks in der Fluidableitung (116) die Schritte S1, S2 und S3 für zwei unterschiedliche Volumenströme durchgeführt werden, um ein weiteres Wertepaar aus Volumenstrom und Pumpenstrom zu ermitteln.

4. Verfahren nach einem der vorhergehenden Ansprüche, wobei der Schritt des Einstellens (S1) des Volumenstroms in der Fluidableitung (116) der Fluidpumpenanordnung (100) aufweist:
Einstellen einer Drehzahl des Pumpenmotors (120).

5. Verfahren nach einem der vorhergehenden Ansprüche, weiterhin aufweisend den Schritt:
Zuordnen (S4) eines Wertepaares aus Volumenstrom und Pumpenstrom zu dem Fluiddruck in der Fluidableitung.

6. Verfahren nach einem der vorhergehenden Ansprüche, wobei die ermittelten Wertepaare aus Volumenstrom und Pumpenstrom verwendet werden, um ein Drehzahl-Strom-Druck-Kennlinienfeld der Fluidpumpenanordnung zu kalibrieren.

7. Fluidpumpensystem (7), aufweisend:
eine Fluidpumpenanordnung (100) und
eine Druckreglereinheit (10);
wobei die Fluidpumpenanordnung (100) eine Pumpenvorrichtung (105) mit einem Pumpenmotor (120) und einer Pumpeneinheit (110) aufweist;
wobei die Fluidpumpenanordnung (100) eine Steuereinheit (140) aufweist, welche ausgeführt ist, das Verfahren nach einem der Ansprüche 1 bis 6 auszuführen.

8. Fluidpumpensystem (7) nach Anspruch 7, wobei die Druckreglereinheit (10) in einer Fluidableitung (116) der Fluidpumpenanordnung angeordnet ist.

9. Fahrzeug (1) mit einem Fluidpumpensystem (7) nach einem der Ansprüche 7 oder 8,
wobei das Fluidpumpensystem (7) als Kraftstoffpumpe ausgeführt ist.

10. Fahrzeug (1) nach Anspruch 9, wobei das Fluidpumpensystem (7) mit einem Kraftstoffbehälter (3) gekoppelt ist und ausgeführt ist, einen in dem Kraftstoffbehälter enthaltenen Kraftstoff an eine Antriebseinheit (5) des Fahrzeugs zu liefern.

11. Fahrzeug (1) nach einem der Ansprüche 9 oder 10, wobei die Steuereinheit (140) ausgeführt ist, das Verfahren nach einem der Ansprüche 1 bis 6 nach einem vorbestimmten Intervall erneut auszuführen.

12. Fahrzeug (1) nach einem der Ansprüche 9 bis 11, wobei die Steuereinheit (140) ausgeführt ist, das Verfahren nach einem der Ansprüche 1 bis 6 vor einer Inbetriebnahme des Fahrzeugs auszuführen.

## Claims

1. Method for calibrating a fluid pump arrangement (100), comprising the following steps:
S1. setting a volumetric flow rate in a fluid discharge line (116) of the fluid pump arrangement (100);
S2. determining a fluid pressure, associated with the volumetric flow rate, in the fluid discharge line (116);
S3. determining a pump current, associated with the volumetric flow rate, of a pump motor (120) of the fluid pump arrangement (100);
wherein the preceding steps S1, S2, S3 are each carried out during a first phase of increasing fluid pressure in the fluid discharge line (116) for the purpose of determining a first value pair of volumetric flow rate and pump current and during a second phase of decreasing fluid pressure in the fluid discharge line (116) for the purpose of determining a second value pair of volumetric flow rate and pump current;
calibration (S4) of a characteristic map of the fluid pump arrangement (100) by way of the value pairs determined in said manner.

2. Method according to Claim 1, wherein, during the first phase of increasing fluid pressure in the fluid discharge line (116), the steps S1, S2 and S3 are carried out for two different volumetric flow rates in order to determine a further value pair of volumetric flow rate and pump current.

3. Method according to Claim 1 or 2, wherein, during the second phase of decreasing fluid pressure in the fluid discharge line (116), the steps S1, S2 and S3 are carried out for two different volumetric flow rates in order to determine a further value pair of volumetric flow rate and pump current.

4. Method according to one of the preceding claims, wherein the step of setting (S1) the volumetric flow rate in the fluid discharge line (116) of the fluid pump arrangement (100) comprises:
setting a rotational speed of the pump motor (120).

5. Method according to one of the preceding claims, furthermore comprising the step:
associating (S4) a value pair of volumetric flow rate and pump current with the fluid pressure in the fluid discharge line.

6. Method according to one of the preceding claims, wherein the determined value pairs of volumetric flow rate and pump current are used in order to calibrate a rotational speed-current-pressure characteristic map of the fluid pump arrangement.

7. Fluid pump system (7) comprising:
a fluid pump arrangement (100) and
a pressure regulator unit (10);
wherein the fluid pump arrangement (100) comprises a pump device (105) with a pump motor (120) and with a pump unit (110) ;
wherein the fluid pump arrangement (100) comprises a control unit (140) which is designed to carry out the method according to one of Claims 1 to 6.

8. Fluid pump system (7) according to Claim 7, wherein the pressure regulator unit (10) is arranged in a fluid discharge line (116) of the fluid pump arrangement.

9. Vehicle (1) with a fluid pump system (7) according to either of Claims 7 and 8,
wherein the fluid pump system (7) is designed as a fuel pump.

10. Vehicle (1) according to Claim 9, wherein the fluid pump system (7) is coupled to a fuel tank (3) and is designed to supply to a drive unit (5) of the vehicle a fuel which is contained in the fuel tank.

11. Vehicle (1) according to either of Claims 9 and 10, wherein the control unit (140) is designed to carry out the method according to one of Claims 1 to 6 again after a predetermined interval.

12. Vehicle (1) according to one of Claims 9 to 11, wherein the control unit (140) is designed to carry out the method according to one of Claims 1 to 6 before a start-up of the vehicle.

## Revendications

1. Procédé d'étalonnage d'un arrangement de pompe à fluide (100), comprenant les étapes suivantes :
S1. réglage d'un débit volumique dans une conduite d'évacuation de fluide (116) de l'arrangement de pompe à fluide (100) ;
S2. détermination d'une pression de fluide associée au débit de fluide dans la conduite d'évacuation de fluide (116) ;
S3. détermination d'un courant de pompe d'un moteur de pompe (120) de l'arrangement de pompe à fluide (100) associé au débit volumique ;
les étapes précédentes S1, S2 et S3 étant respectivement exécutées pendant une première phase de pression de fluide croissante dans la conduite d'évacuation de fluide (116) en vue de déterminer une première paire de valeurs du débit volumique et du courant de pompe et pendant une deuxième phase de pression de fluide décroissante dans la conduite d'évacuation de fluide (116) en vue de déterminer une deuxième paire de valeurs du débit volumique et du courant de pompe ;
étalonnage (S4) d'un diagramme caractéristique de l'arrangement de pompe à fluide (100) par les paires de valeurs ainsi déterminées.

2. Procédé selon la revendication 1, pendant la première phase de pression de fluide croissante dans la conduite d'évacuation de fluide (116), les étapes S1, S2 et S3 étant exécutées pour deux débits volumiques différents afin de déterminer une paire de valeurs supplémentaire du débit volumique et du courant de pompe.

3. Procédé selon la revendication 1 ou 2, pendant la deuxième phase de pression de fluide décroissante dans la conduite d'évacuation de fluide (116), les étapes S1, S2 et S3 étant exécutées pour deux débits volumiques différents afin de déterminer une paire de valeurs supplémentaire du débit volumique et du courant de pompe.

4. Procédé selon l'une des revendications précédentes, l'étape de réglage (S1) du débit volumique dans la conduite d'évacuation de fluide (116) de l'arrangement de pompe à fluide (100) comprenant :
réglage d'une vitesse de rotation du moteur de pompe (120).

5. Procédé selon l'une des revendications précédentes, comprenant en outre l'étape suivante :
association (S4) d'une paire de valeurs du débit volumique et du courant de pompe à la pression de fluide dans la conduite d'évacuation de fluide.

6. Procédé selon l'une des revendications précédentes, les paires de valeurs déterminées du débit volumique et du courant de pompe étant utilisées pour étalonner un diagramme caractéristique vitesse de rotation - courant - pression de l'arrangement de pompe à fluide.

7. Système de pompe à fluide (7) comprenant :
un arrangement de pompe à fluide (100) et
une unité de régulation de pression (10) ;
l'arrangement de pompe à fluide (100) possédant un dispositif de pompage (105) comprenant un moteur de pompe (120) et une unité de pompe (110) ;
l'arrangement de pompe à fluide (100) possédant une unité de commande (140) qui est conçue pour mettre en oeuvre le procédé selon l'une des revendications 1 à 6.

8. Système de pompe à fluide (7) selon la revendication 7, l'unité de régulation de pression (10) étant disposée dans une conduite d'évacuation de fluide (116) de l'arrangement de pompe à fluide.

9. Véhicule (1) équipé d'un système de pompe à fluide (7) selon l'une des revendications 7 ou 8, le système de pompe à fluide (7) étant réalisé sous la forme d'une pompe à carburant.

10. Véhicule (1) selon la revendication 9, le système de pompe à fluide (7) étant connecté à un réservoir à carburant (3) et étant conçu pour délivrer un carburant contenu dans le réservoir à carburant à un groupe propulseur (5) du véhicule.

11. Véhicule (1) selon l'une des revendications 9 ou 10, l'unité de commande (140) étant conçue pour mettre de nouveau en oeuvre le procédé selon l'une des revendications 1 à 6 après un intervalle prédéterminé.

12. Véhicule (1) selon l'une des revendications 9 ou 11, l'unité de commande (140) étant conçue pour mettre en oeuvre le procédé selon l'une des revendications 1 à 6 avant une mise en service du véhicule.
